# DEMANDE DE BREVET EUROPEEN

(11) **EP 4 559 767 A1**
(43) Date de publication de la demande: **28.05.2025**
(21) Numéro de dépôt: 24215588.5
(22) Date de dépôt: 26.11.2024
(51) Int. Cl.: B60T 13/74, F16D 55/226, F16D 65/60, F16D 65/18

(54) **FREIN A DISQUE, NOTAMMENT POUR VEHICULE AUTOMOBILE**

(30) Priorité: 27.11.2023 FR 2313086
(71) Demandeur: Hitachi Astemo France, 93700 Drancy (FR)
(72) Inventeur: BOURLON, Philippe, 77230 DAMMARTIN EN GOËLE (FR); CUBIZOLLES, Cyril, 93700 DRANCY (FR)
(74) Mandataire: IPAZ

(57) **Abrégé**

L'invention concerne un frein à disque (F) comprenant un étrier (E) comportant en regard l'une de l'autre, une plaquette de frein fixe (P1) et une plaquette de frein mobile (P2), ainsi qu'un mécanisme d'actionnement de la plaquette de frein mobile (P2) comprenant un système vis/écrou et des moyens de transmission d'un mouvement de rotation d'un arbre moteur (4) au système vis/écrou pour actionner la plaquette de frein mobile (P2), ledit mécanisme d'actionnement étant logé dans un logement (L) dans l'étrier (E).

L'invention consiste en ce que la vis (1) est montée fixe en translation dans ledit logement (L) et entraînable en rotation par les moyens de transmission, l'écrou (2) monté fixe en rotation dans ledit logement (L) étant entraînable en translation le long de la vis (1) lors de la rotation de cette dernière, ledit écrou (2) portant deux pistons (9) en appui contre la plaquette de frein mobile (P2).

## Description

L'invention se rapporte à un frein à disque, notamment pour véhicule automobile, comprenant un étrier, susceptible d'enjamber un secteur d'un disque solidaire d'une roue dudit véhicule, de manière à positionner une plaquette de freinage de chaque côté du disque, avec des moyens de commande du serrage des plaquettes de freinage sur le disque. Un tel frein à disque comprend un étrier comportant en regard l'une de l'autre, une plaquette de frein fixe et une plaquette de frein mobile, ainsi qu'un mécanisme d'actionnement de la plaquette de frein mobile comprenant un système vis/écrou et des moyens de transmission d'un mouvement de rotation d'un arbre moteur au système vis/écrou pour actionner la plaquette de frein mobile, ledit mécanisme d'actionnement étant logé dans un logement traversant ménagés dans l'étrier.

Etat de la technique.

Dans un frein à disque, un étrier est solidaire en rotation du véhicule, par exemple du porte-fusée formant le moyeu de la roue. L'étrier comprend généralement deux branches reliées entre elles par une voûte, et enjambe un secteur d'un disque qui est solidaire de la roue, avec une branche de chaque côté du disque. L'étrier enserre le disque entre ses branches par l'intermédiaire d'une paire de garnitures de frottement, ou plaquettes de frein, une de chaque côté du disque. Pour le freinage, ces plaquettes sont serrées contre le disque par l'action d'un ou plusieurs pistons de frein, actionnés soit par une pression hydraulique lors d'une utilisation en frein de service soit par des moyens électromécaniques lors d'une utilisation en frein de stationnement. Ce serrage crée ainsi un frottement entre les plaquettes de frein et le disque, qui dissipe sous forme de chaleur l'énergie cinétique de la roue et réalise le freinage.

La fonction de frein de service consiste à ralentir le véhicule lorsqu'il est en mouvement, si besoin jusqu'à son arrêt complet. En plus du frein de service, un tel frein à disque peut être mis en oeuvre pour remplir aussi une fonction de frein de secours et/ou de frein de stationnement, aussi appelé frein de parc.

Dans le cas où le frein à disque comporte des moyens électromécaniques pour l'actionnement dudit frein, lesdits moyens électromécaniques comportent d'une part un groupe vis/écrou et d'autre part un ensemble moto-réducteur électrique pour entraîner en rotation dans les deux sens, l'écrou du groupe vis-écrou. Un frein à disque de ce type est, par exemple décrit dans FR-A-3 116 576.

L'étrier dans ce document présente deux branches, l'une portant une plaquette de frein fixe par rapport à l'étrier et l'autre une plaquette de frein mobile par rapport à l'étrier ménagées en regard l'une de l'autre, la plaquette de frein mobile étant entraînée en déplacement vers la partie fixe à l'aide d'un actionneur électromécanique comprenant un système vis-écrou à billes et une interface de commande en rotation depuis un moteur.

L'écrou est monté fixe en translation dans un logement de la branche de l'étrier et son entraînement en rotation par l'interface de commande en rotation du moteur génère le déplacement en translation de la vis dont une extrémité est raccordée à la plaquette de frein mobile.

Ainsi, l'entrainement en rotation de l'écrou dans un premier sens provoque la translation de la vis en saillie de la branche de l'étrier et donc l'entraînement en translation de la plaquette de frein mobile en direction de la plaquette de frein fixe, pour commander le serrage du disque tandis que l'entraînement en rotation de l'écrou dans le sens contraire, provoque le déplacement en translation de la vis dans le sens inverse et donc l'écartement de la plaquette de frein mobile pour commander le desserrage.

Un frein tel que décrit ci-dessus présente cependant une structure complexe et de plus, relativement encombrante, lié notamment à l'interface entre l'arbre moteur et l'écrou.

Par ailleurs, il s'ensuit également des problèmes liés aux forces axiales s'exerçant sur la vis et son interface avec la plaquette de frein. En effet, l'entraînement de la plaquette de frein mobile par la vis pose notamment un problème lorsque la plaquette de frein est de grande dimensions, la force de poussée étant appliquée axialement mais uniquement ponctuellement à l'extrémité de la tige. De ce fait, cette poussée axiale non répartie sur l'ensemble de plaquette de frein peut conduire à un défaut de serrage.

L'invention a donc pour objet de proposer un frein à disque de ce type dans lequel la structure est plus simple et présente donc un encombrement réduit et dans lequel l'application de la poussée sur la plaquette de frein est mieux répartie.

L'invention a pour objet un frein à disque comprenant un étrier comportant en regard l'une de l'autre, une plaquette de frein fixe et une plaquette de frein mobile, ainsi qu'un mécanisme d'actionnement de la plaquette de frein mobile comprenant un système vis/écrou et des moyens de transmission d'un mouvement de rotation d'un pignon moteur au système vis/écrou pour actionner la plaquette de frein mobile, ledit mécanisme d'actionnement étant logé dans un logement traversant ménagés dans l'étrier caractérisé en ce que :
la vis du mécanisme vis-écrou est montée fixe en translation dans ledit logement et entraînable en rotation par les moyens de transmission,
tandis que l'écrou monté fixe en rotation dans ledit logement est entraînable en translation le long de la vis lors de l'entraînement en rotation de cette dernière,
ledit écrou portant au moins deux pistons montés en appui contre la plaquette de frein mobile, l'entraînement en translation de l'écrou dans un premier sens permettant d'entraîner en translation les pistons pour entraîner la plaquette de frein mobile vers la plaquette de frein fixe et l'entraînement en translation en sens inverse de l'écrou et des pistons permettant d'écarter la plaquette de frein mobile de la plaquette de frein fixe, c'est à dire que l'écrou tire les pistons vers l'arrière pour les éloigner de la plaquette de frein fixe.

Ainsi de manière avantageuse, l'entraînement en rotation de la vis, fixe en translation, sous l'effet de l'actionnement du pignon moteur provoque le déplacement en translation de l'écrou qui est lui fixe en rotation. La vis étant l'élément du mécanisme vis-écrou qui est entraîné par le pignon-moteur, les moyens de transmission de la rotation du pignon moteur à la vis nécessite un nombre de pièces moins élevé et moins encombrantes que celles nécessaires pour transmettre la rotation du pignon-moteur à un écrou.

Les moyens de transmission d'un mouvement de rotation d'un pignon moteur au système vis/écrou sont ainsi également logés dans ledit logement. Ces moyens de transmission sont constitués successivement, à partir de l'arbre moteur, d'un pignon moteur, d'un porte-satellites, d'une couronne dite fixe et d'une couronne mobile. La couronne mobile est solidaire à la fois du porte-satellite et de la vis du système vis/écrou. Ainsi, de manière avantageuse, l'écrou bloqué en rotation dans le logement est entraîné en translation sous l'effet de l'entraînement en rotation de la vis par l'arbre moteur.

Cette couronne est avantageusement réalisée d'une pièce avec la vis, par exemple constituant l'extrémité de la vis dont l'autre extrémité est engagée dans l'écrou. De préférence, le système vis/écrou est constitué d'un système vis/écrou à billes. Un capot recouvre le moteur électrique et comporte les moyens de commande dudit moteur.

De plus, l'écrou qui porte deux pistons entraînés en translation contre la plaquette de frein mobile exerce sur celle-ci une poussée axiale en deux points d'appui distincts permettant une meilleure distribution de cette poussée, notamment lorsque la plaquette de freinage est de plus grandes dimensions.

Le frein comprend généralement un étrier présentant deux branches définissant entre elles un espace, de sorte que le frein est ainsi monté à chevauchement sur un disque solidaire d'une roue, un secteur du disque étant ainsi logé entre les branches de l'étrier portant chacune une plaquette de frein. L'une des plaquettes de frein dite mobile est entraînable en déplacement par rapport à l'autre plaquette dite fixe guidée en translation selon un axe perpendiculaire au disque interposé entre les plaquettes de frein, dans une action de serrage ou de desserrage. Le logement traversant est ménagé dans l'une des branches de l'étrier.

Le frein selon l'invention présente donc une structure simplifiée, plus compacte, et donc moins onéreuse tout en offrant une poussée axiale mieux distribuée sur la plaquette de frein mobile.

L'une des branches de l'étrier comprend donc le logement dans lequel est monté le système vis-écrou du mécanisme d'actionnement de la plaquette de frein mobile, ce logement cylindrique, est ouvert à une extrémité dans l'espace entre lesdites branches et accueille à son autre extrémité, les moyens de transmission de la rotation du pignon moteur à la vis.

Selon une forme de réalisation préférée, l'écrou se présente sous la forme d'un manchon cylindrique entourant la vis, et portant deux oreilles en saillie, diamétralement opposées.

Le logement est ainsi de forme et dimensions complémentaires à l'écrou, avec deux rainures pour accueillir les oreilles de l'écrou, de sorte que l'écrou est fixe en translation dans le logement de l'étrier et uniquement entraînable en translation dans ledit logement sous l'effet de la rotation de la vis.

Les deux pistons comprennent respectivement une tige dont une extrémité est fixée sur une oreille de l'écrou et l'autre extrémité porte la tête du piston destinée à faire saillie dans l'espace entre les branches de l'étrier, et en appui contre la plaquette de frein mobile qui est ainsi également déplacée et entraînée en translation vers la plaquette de frein fixe dans un sens de rotation de la vis et en retrait dans le sens de rotation contraire.

Un soufflet d'étanchéité est monté de manière étanche à l'extrémité du logement avec les deux têtes de piston.

Selon une première variante, le soufflet d'étanchéité présente une partie plane, de préférence renforcée par un insert métallique, comportant deux orifices dans lesquels sont engagées les tiges des pistons. Le soufflet d'étanchéité est en outre fixé de manière étanche à la périphérie du logement, fermant ledit logement, avec les têtes de piston reposant contre la face extérieure dudit soufflet d'étanchéité, en saillie dans l'espace entre les branches de l'étrier, la périphérie des trous étant fixée de manière étanche sur lesdites têtes de piston.

Selon une deuxième variante, un élément de fermeture du logement est prévu. Cet élément de fermeture est monté par coopération de forme dans ladite extrémité du logement et porte le soufflet d'étanchéité, ledit élément de fermeture comportant deux orifices en correspondance avec les orifices du soufflet d'étanchéité pour le passage des tiges de piston.

Le frein selon l'invention permet de limiter l'encombrement lié à l'interface entre le pignon moteur et le système vis/écrou, ce qui permet de diminuer également le nombre de pièces nécessaires et, de plus, aucune force radiale n'est soutenue par la vis et l'interface, l'écrou se comportant comme un piston de type hydraulique.

De plus, comme on prévoit deux pistons, on offre ainsi une meilleure flexibilité pour les dimensions des plaquettes de frein.

De manière avantageuse, le système d'actionnement de la plaquette mobile comprenant le système vis/écrou, les deux pistons et le soufflet d'étanchéité constitue un module pré-assemblé intégrable dans le logement de l'étrier. Un tel module est donc assemblé sous forme d'un ensemble qui est ensuite intégré dans le logement prévu à cet effet dans l'étrier. La périphérie du soufflet permet en se fixant sur une rainure prévue autour de l'ouverture du logement la fixation de cet ensemble.

En variante, ce module comprend également la plaque de fermeture sur laquelle le soufflet d'étanchéité est fixé

La présente invention concerne également un véhicule automobile équipé de freins à disque selon l'invention.

L'invention a également pour objet un procédé de fabrication d'un frein selon l'invention, dans lequel on réalise un alésage traversant dans l'une des branches de l'étrier pour former un logement débouchant dans l'espace entre les branches, on monte dans ledit logement le système vis/écrou portant les deux pistons et le soufflet d'étanchéité, on raccorde une extrémité de la vis avec les moyens de transmission du mouvement de rotation d'un pignon moteur relié à un moteur électrique tandis que le soufflet d'étanchéité est raccordé à la périphérie du logement.

On décrira maintenant l'invention plus en détails en référence au dessin dans lequel les figures représentent :
[Fig. 1] une vue en perspective d'un frein à disque selon l'invention
[Fig. 2] une vue en coupe transversale d'un étrier d'un frein selon l'invention ;
[Fig. 3] une vue en perspective latérale d'un écrou du système vis/écrou selon l'invention ;
[Fig. 4] une vue en perspective latérale d'un écrou et des pistons du système vis/écrou selon l'invention ;

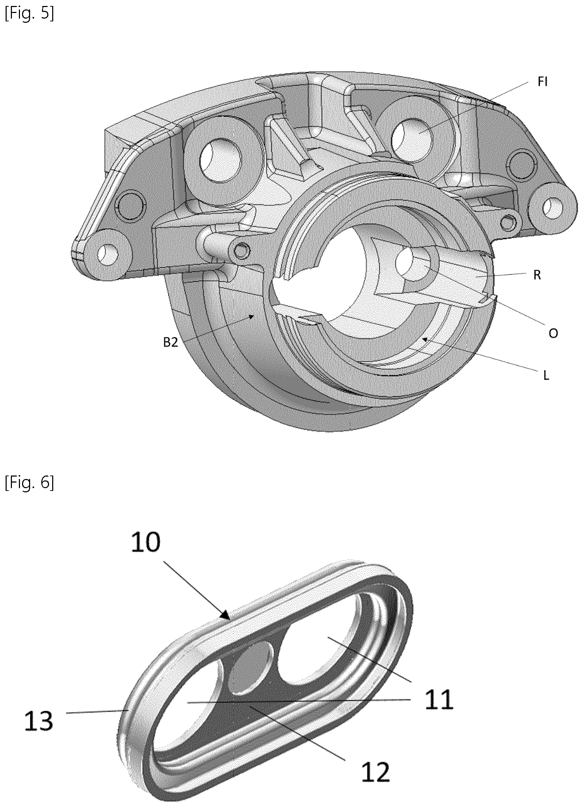

[Fig. 5] une vue en perspective de l'étrier ;
[Fig. 6] une vue en perspective arrière d'un soufflet d'étanchéité pour un frein selon l'invention ;
[Fig. 7] une vue en perspective latérale d'un système vis/écrou selon l'invention sous forme de module ;
[Fig. 8] une vue en coupe transversale du système de la figure 7 ;
[Fig. 9] une vue en perspective d'un frein selon l'invention.

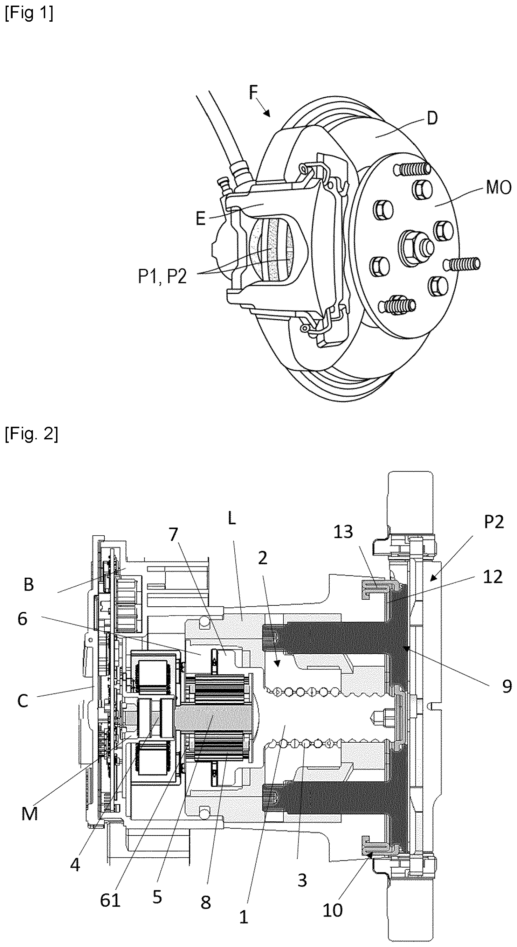

Comme cela est visible sur la figure 1, l'invention concerne un frein à disque F comprenant un étrier E destiné à enjamber un secteur d'un disque D qui est solidaire d'une roue de véhicule, par exemple sur le moyeu MO.

Cet étrier E comprend deux branches B1, B2 définissant entre elles un espace E1 dans lequel s'étendent en regard l'une de l'autre des plaquettes de frein P1, P2, destinées à se trouver de part et d'autre du secteur du disque.

Une branche de l'étrier B1, également appelé nez de l'étrier E porte la plaquette de frein dite fixe P1 par rapport à l'étrier E tandis que la seconde branche B2 porte la plaquette de frein dite mobile P2 par rapport à l'étrier E et le mécanisme d'actionnement de la plaquette de frein mobile.

La branche B2 comprend ainsi un alésage traversant définissant un logement L dans lequel est logé en tant que mécanisme d'actionnement un système vis/écrou actionné par un motoréducteur. Ce motoréducteur est ici entièrement coaxial à la vis, et situé entièrement en arrière de la vis c'est-à-dire du côté opposé aux plaquettes de frein par rapport au filetage de la vis, laquelle peut ainsi être réalisée en une pièce pleine et sans alésage intérieur. Ce système vis/écrou est de préférence constitué d'un ensemble vis/écrou à billes, comprenant une vis 1, un écrou 2 et des billes 3 engagées dans des filets de la vis 1 et de l'écrou 2. Cet écrou à billes fonctionne ici en recirculation des billes dans l'épaisseur de l'écrou, ici dans un chemin radialement ouvert vers l'extérieur et recouvert par une bague, et dont les extrémités sont délimitées par des pions insérés radialement dans l'écrou.

Ainsi, la vis 1 et l'écrou 2 s'étendent dans le logement L. La vis 1 est montée entrainable en rotation sous l'effet du motoréducteur et fixe en translation tandis que l'écrou 2 est monté fixe en rotation dans ledit logement L et déplaçable en translation dans ledit logement L sous l'effet de l'entraînement en rotation de la vis 1.

Des moyens de transmission du mouvement de rotation d'un pignon moteur 5 permettent l'entraînement en rotation de la vis 1 et sont par exemple constitués successivement, à partir de l'arbre moteur 4, d'un pignon moteur 5 formant planétaire, d'un porte-satellites 61, d'une couronne fixe 6 et d'une couronne mobile 7. La couronne mobile 7 est solidaire de la vis 1. Ainsi, cette couronne 7 est réalisée d'une pièce avec la vis 1, par exemple en constituant l'extrémité de la vis 1.

Les pignons satellites 8 situés radialement entre le porte-satellites 61 et la couronne mobile 7 assurent l'irréversibilité des mouvements transmis à l'intérieur du frein F.

Le pignon moteur 5 est fixé à l'arbre moteur 4, et le porte-satellites 61 engrène le pignon moteur 5 aussi bien que la couronne mobile 7 par des pignons satellites 8. La vis 1 est fixée à la couronne mobile 7.

De ce fait, lors de l'entrainement en rotation de la couronne mobile 7 sous l'effet du pignon moteur 5, la vis 1 est entraînée en rotation. L'écrou 2 est lui, maintenu fixe en rotation dans le logement L et est alors entraîné en translation le long de la vis 1.

L'écrou 2 se présente sous la forme d'un manchon cylindrique 21 entourant la vis 1, et portant deux oreilles 22 en saillie, par exemple diamétralement opposées ou placées de part et d'autre du manchon 21 en symétrie miroir.

Le logement L est ainsi de forme et dimensions complémentaires à l'écrou 2 monté sur la vis 1, présentant un alésage et deux rainures R à la périphérie de l'alésage de sorte que l'écrou 2 est fixe en translation dans le logement L de l'étrier E, du fait des oreilles 22 engagées dans les rainures R de formes et dimensions complémentaires et uniquement entraînable en translation dans ledit logement L sous l'effet de la rotation de la vis 1. La branche B2 comporte en outre des orifices de fixation FI pour la branche B1.

L'écrou 2 porte deux pistons 9 qui comprennent respectivement une tige 91 dont une extrémité est fixée sur une oreille 22 de l'écrou 1 et l'autre extrémité porte la tête du piston 92. Cette dernière extrémité de la tige 91 est également engagée au travers d'un orifice O ménagé à l'extrémité de chaque rainure R.

La tige 91 des pistons 9 est engagée également dans un orifice traversant 11 ménagé dans un soufflet d'étanchéité 10.

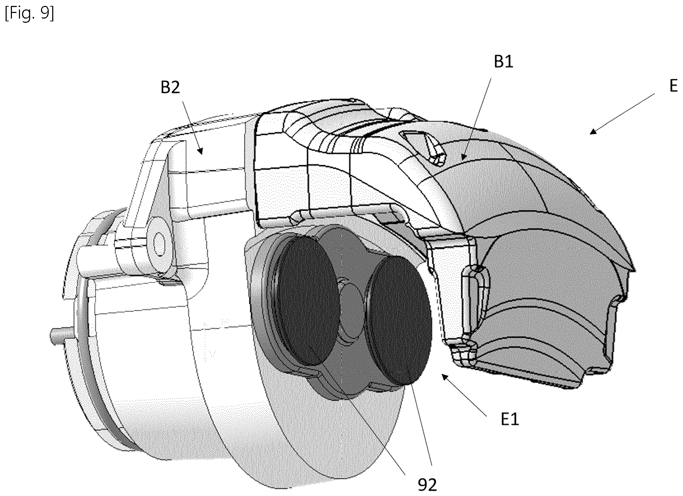

Ce soufflet d'étanchéité 10 est destiné à être mis en place à l'extrémité du logement L de l'étrier 2 pour fermer de manière étanche ledit logement L, avec les têtes de piston 92 en saillie dans l'espace E1 entre les branches B1, B2 de l'étrier E comme cela est visible à la figure 9.

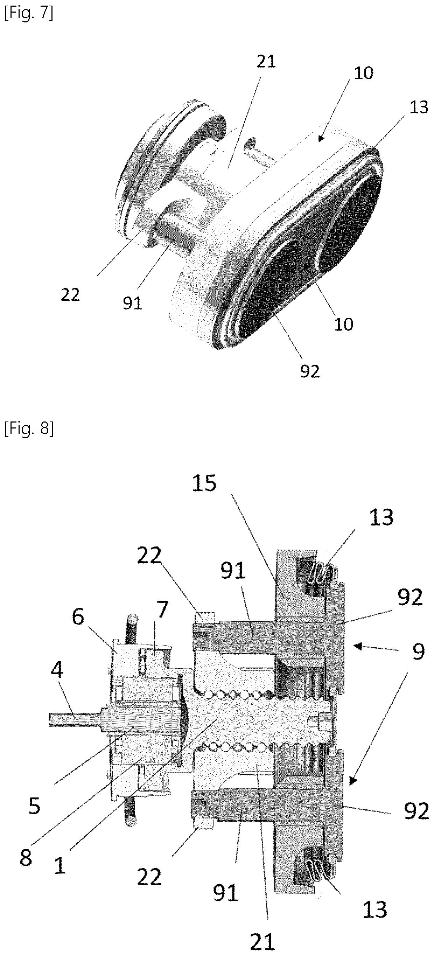

Ce soufflet d'étanchéité 10 présente une partie centrale plane 12 rendue rigide à l'aide d'un insert métallique, et dans laquelle sont ménagés des orifices traversants 11, cette partie centrale 12 étant entourée d'une jupe 13, notamment pliée en forme d'accordéon, dans un élément de fermeture 15 sous forme d'une plaque métallique comportant des orifices de passage pour les tiges 91 des pistons 9, la plaque 15 présentant des dimensions et une forme permettant l'engagement à force dans l'extrémité du logement L (comme cela est visible figure 8).

En variante, la jupe 13 du soufflet d'étanchéité 10 est fixée, également pliée en forme d'accordéon, dans une rainure de fixation à la périphérie de l'extrémité du logement L, comme cela est visible à la figure 2.

Le soufflet d'étanchéité 10 présente également des parties souples en forme d'accordéon, fixées entre la périphérie du trou traversant 11 du soufflet d'étanchéité 10 et la tête 92 d'un piston 9, permettant de garantir l'étanchéité du logement L lors du déplacement des pistons 9.

Le soufflet d'étanchéité 10 est ainsi monté de manière étanche à l'extrémité du logement L avec les deux têtes de piston 92 destinées à faire saillie dans l'espace E1 entre les branches B1, B2 de l'étrier E, le déploiement des parties pliées en accordéon maintenant la fixation et l'étanchéité.

Les têtes de piston 92 sont en appui contre la plaquette de frein mobile P2. Ainsi, dans un premier sens d'entraînement en rotation de la vis 1, l'écrou 2 est entraîné en translation de sorte que les pistons 9 sont entraînés en saillie dans l'espace E1 et, en appui contre la plaquette de frein mobile P2, pour entraîner en translation celle-ci vers la plaquette de freinage fixe P1 pour serrer le disque.

Dans le sens contraire d'entraînement en rotation de la vis 1, l'écrou 2 est entraîné en translation en retrait dans le logement L, entraînant le retrait des pistons 9 ce qui écarte la plaquette mobile P2 de la plaquette fixe P1 dans le sens d'un desserrage.

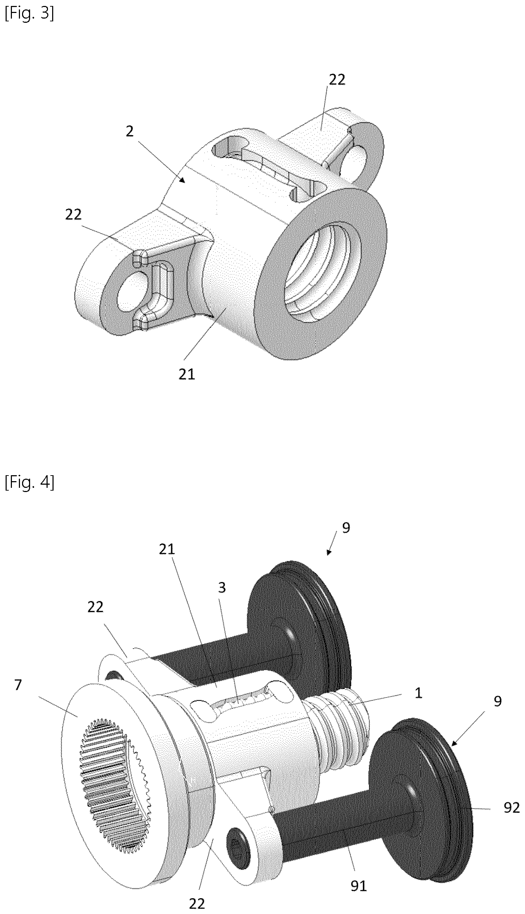

A l'autre extrémité du logement L, l'alésage présente un diamètre plus grand dans lequel on loge les moyens de transmission du mouvement de rotation du pignon moteur 5 à la vis 1 tels qu'un porte-satellites 61, une couronne fixe 6 et une couronne mobile 7. Cette couronne mobile 7 est donc solidaire de la vis 1. Comme cela est visible à la figure 3, cette couronne mobile 7 constitue l'extrémité de la vis 1.

L'alésage traversant est réalisé dans la branche B2 de l'étrier E pour former le logement L débouchant dans l'espace E1 entre ladite branche B2 et la branche B1. On monte dans ledit logement le système vis/écrou, avec un piston 9 raccordé à l'écrou 2, s'étendant entre chaque oreille 22 de l'écrou 2 et le soufflet d'étanchéité 10, monté à l'extrémité du logement L.

Les moyens de transmission du mouvement de rotation sont montés à l'extrémité de l'alésage, l'extrémité de la vis 1 en forme de couronne 7 étant raccordée avec le porte- satellites 61 qui est en prise avec le pignon moteur 5, ce dernier étant alors relié à l'arbre moteur 4 d'un moteur électrique M, monté dans un boîtier B fixé sur l'étrier E à la sortie du logement L et fermé à l'aide d'un capot de protection C.

L'extrémité de chaque tige 91 de piston 9 étant fixée dans un orifice d'une oreille 22 de l'écrou 2, il est possible d'ajuster la position de cette fixation pour décaler l'une des têtes de piston par rapport à l'autre ce qui permet d'ajuster la course de poussée axiale de chaque tête de piston 92 par rapport à la plaquette de frein mobile. De ce fait, il est possible de compenser une différence de poussée axiale et donc un risque d'usure de la garniture de la plaquette de frein.

De préférence, les garnitures des plaquettes de frein présentent un retrait de matière sur une partie de ladite garniture permettant ainsi une atténuation du bruit de la plaquette sur le disque.

Bien entendu, l'invention n'est pas limitée aux exemples qui viennent d'être décrits et de nombreux aménagements peuvent être apportés à ces exemples sans sortir du cadre de l'invention.

### NOMENCLATURE

F frein à disque
E étrier
MO moyeu
D disque
B1, B2 branche de l'étrier
E1 espace entre les branches de l'étrier
P1 plaquette de frein fixe
P2 plaquette de frein mobile
L logement
R rainure
O orifice
FI orifice de fixation
1 vis
2 écrou
21 manchon
22 oreille
3 billes
4 arbre moteur
5 pignon moteur
61 porte-satellite
6 couronne fixe
7 couronne mobile
8 pignon satellite
9 piston
91 tige
92 tête du piston
10 soufflet d'étanchéité
11 orifice traversant
12 partie centrale
13 jupe
15 élément de fermeture
M moteur électrique
B boîtier du moteur électrique
C capot de protection

## Revendications

1. Frein à disque (F) comprenant un étrier (E) comportant en regard l'une de l'autre, une plaquette de frein fixe (P1) et une plaquette de frein mobile (P2), ainsi qu'un mécanisme d'actionnement de la plaquette de frein mobile (P2) comprenant un système vis/écrou et des moyens de transmission d'un mouvement de rotation d'un arbre moteur (4) au système vis/écrou pour actionner la plaquette de frein mobile (P2), ledit mécanisme d'actionnement étant logé dans un logement (L) traversant ménagé dans l'étrier (E), **caractérisé en ce que** la vis (1) du mécanisme vis-écrou est montée fixe en translation dans ledit logement (L) et entraînable en rotation par les moyens de transmission, tandis que l'écrou (2) monté fixe en rotation dans ledit logement (L) est entraînable en translation le long de la vis (1) lors de l'entraînement en rotation de cette dernière, ledit écrou (2) portant au moins deux pistons (9) montés en appui contre la plaquette de frein mobile (P2), l'entraînement en translation de l'écrou (2) dans un premier sens permettant d'entraîner en translation les pistons (9) pour entraîner la plaquette de frein mobile (P2) vers la plaquette de frein fixe (P1) et l'entraînement en translation en sens inverse de l'écrou (2) et des pistons (9) permettant d'écarter la plaquette de frein mobile (P2) de la plaquette de frein fixe (P1).

2. Frein à disque (F) selon la revendication 1, **caractérisé en ce que** l'une (B2) des branches (B1, B2) de l'étrier (E) comprend le logement (L) dans lequel est monté le système vis-écrou, ce logement (L) cylindrique à section circulaire, est ouvert à une extrémité dans l'espace (E1) entre lesdites branches (B1, B2) et accueille à son autre extrémité au moins en partie, les moyens de transmission de la rotation du pignon moteur (5) à la vis (1).

3. Frein à disque (F) selon la revendication 1 ou 2, **caractérisé en ce que** l'écrou (2) se présente sous la forme d'un manchon cylindrique (21) entourant la vis (2), et portant deux oreilles (22) en saillie du manchon (21), diamétralement opposées.

4. Frein à disque (F) selon la revendication 3, **caractérisé en ce que** le logement (L) est ainsi de forme et dimensions complémentaires à l'écrou sur la vis, avec deux rainures (R) pour accueillir les oreilles (22) de l'écrou (2).

5. Frein à disque (F) selon l'une des revendications 3 ou 4, **caractérisé en ce que** les deux pistons (9) comprennent respectivement une tige (91) dont une extrémité est fixée sur une oreille (22) de l'écrou (2) et l'autre extrémité porte la tête (92) du piston (9) destinée à faire saillie dans l'espace (E1) entre les branches (B1, B2) de l'étrier (E), et en appui contre la plaquette de frein mobile (P2).

6. Frein à disque (F) selon la revendication 5, **caractérisé en ce qu'**un soufflet d'étanchéité (10) est monté de manière étanche entre l'extrémité du logement (L) et les deux têtes (92) de piston (9).

7. Frein à disque (F) selon la revendication 6, **caractérisé en ce que** le soufflet d'étanchéité (10) présente une partie plane, de préférence renforcée par un insert métallique, comportant deux orifices dans lesquels sont engagées les tiges (91) des pistons (9).

8. Frein à disque (F) selon l'une des revendications 6 ou 7, **caractérisé en ce que** le système vis/écrou, les deux pistons (9) et le soufflet d'étanchéité (10) constituent un module pré-assemblé intégrable dans le logement (L) de l'étrier (E).

9. Frein à disque (F) selon la revendication 8, **caractérisé en ce qu'**un élément de fermeture (15) du logement (L) est monté par coopération de forme dans l'extrémité du logement (L) et porte le soufflet d'étanchéité (10), ledit élément de fermeture (15) comportant deux orifices en correspondance avec les orifices traversants (11) du soufflet d'étanchéité (10) pour le passage des tiges (91) de piston (9).

10. Frein à disque (F) selon la revendication 9, **caractérisé en ce que** le système vis/écrou, les deux pistons (9), le soufflet d'étanchéité (10) et la plaque de fermeture (15) constituent un module pré-assemblé intégrable dans le logement (L) de l'étrier (E).

11. Frein à disque (F) selon l'une des revendications 1 à 10, **caractérisé en ce que** les moyens de transmission d'un mouvement de rotation d'un pignon moteur au système vis/écrou sont également logés dans ledit logement (L) et comprennent, à partir de l'arbre moteur (4), un pignon moteur (5), un porte-satellites (61), une couronne fixe (6) et une couronne mobile (7), solidaire de la vis (1) du système vis/écrou.

12. Frein à disque (F) selon la revendication 11, **caractérisé en ce que** la couronne (7) est réalisée d'une pièce avec la vis (1), tel que constituant l'extrémité de la vis (1), dont l'autre extrémité est engagée dans l'écrou (2).

13. Véhicule automobile équipé de freins à disque selon l'une des revendications 1 à 12.

14. Procédé de fabrication d'un frein à disque (F) comprenant un étrier (E) comportant en regard l'une de l'autre, une plaquette de frein fixe (P1) et une plaquette de frein mobile (P2), ainsi qu'un mécanisme d'actionnement de la plaquette de frein mobile (P2) comprenant un système vis/écrou et des moyens de transmission d'un mouvement de rotation d'un pignon moteur (5) au système vis/écrou pour actionner la plaquette de frein mobile (P2),
selon l'une des revendications 1 à 12, **caractérisé en ce qu'**on réalise un alésage traversant dans l'une des branches de l'étrier (E) pour former un logement (L) débouchant dans l'espace (E1) entre les branches (B1, B2), on monte dans ledit logement (L) le système vis/écrou, on raccorde une extrémité de la vis (1) avec les moyens de transmission du mouvement de rotation d'un pignon moteur (5) relié à un moteur électrique (M) tandis que l'extrémité de l'écrou (2) est fixée à la plaquette de frein mobile (P2).

15. Procédé selon la revendication précédente, **caractérisé en ce qu'**on monte le système vis/écrou dans le logement traversant (L) en l'introduisant par l'avant, c'est-à-dire depuis le côté du nez de l'étrier, tandis que les moyens de transmission sont insérés dans le logement (L) depuis le côté opposé au nez de l'étrier.
